# EUROPEAN PATENT APPLICATION

(11) **EP 4 716 205 A2**
(43) Date of publication of application: **25.03.2026**
(21) Application number: 25227556.5
(22) Date of filing: 17.12.2024
(51) Int. Cl.: H04N 1/00

(54) **IMAGE FORMATION CONTROL METHOD AND IMAGE FORMING APPARATUS**

(30) Priority: 22.12.2023 JP 2023216379
(62) Divisional of application: 24220798.3
(71) Applicant: KYOCERA Document Solutions Inc., Osaka-shi, Osaka 540-8585 (JP)
(72) Inventor: Nakatsuka, Shinji, Osaka-shi, 540-8585 (JP); Teshima, Kentaro, Osaka-shi, 540-8585 (JP)
(74) Representative: Plougmann Vingtoft a/s

(57) **Abstract**

An image formation control method is provided for an image forming apparatus (10) including a printing device (1) and an image reading device (5). During continuous print processing, a control device (8) executes a test print process and determines whether a read test image is normal. If the image is determined to be abnormal, the continuous print processing is suspended, and the printing device (1) is automatically adjusted based on the abnormality. After adjusting the printing device (1), the method is characterized by re-executing the test print process and the reading process. When it is determined that the re-read image is normal, the control device (8) causes the printing device (1) to re-execute the print process starting from a page immediately following the page corresponding to the most recent normal determination, thereby resuming the continuous print processing.

## Description

This application is based upon and claims the benefit of priority from the corresponding Japanese Patent Application No. 2023-216379 filed on December 22, 2023.

### BACKGROUND

The present disclosure relates to an image formation control method and an image forming apparatus for determining whether or not there is an abnormality in an output image during continuous print processing.

It is known that an image forming apparatus forms an image on a sheet, reads the image from the sheet, and makes an abnormality determination of the output image. For example, US 2023/0241886 A1 discloses a liquid discharge apparatus which includes a liquid discharge head, circuitry, and an image detector. The liquid discharge head includes multiple nozzles and discharges a liquid from the multiple nozzles. The circuitry causes the liquid discharge head to discharge the liquid onto a recording medium to form an image in an image area of the recording medium in a printing operation. The image detector reads the image formed on the recording medium. The circuitry further causes the liquid discharge head to discharge the liquid onto at least one of a leading end or a trailing end of the recording medium to form a flushing pattern different from the image in a flushing operation, causes the image detector to read the flushing pattern, detect a defective part in the flushing pattern read by the image detector, and identify a defective nozzle among the multiple nozzles based on defective part.

### SUMMARY

An image formation control method according to one aspect of the present disclosure is a method for controlling an image forming apparatus including a printing device and an image reading device. The printing device is capable of executing continuous print processing for continuously forming images on a plurality of sheets and the image reading device is capable of executing a reading process of reading the images formed on the sheets. The image formation control method includes a control device causing the printing device to execute the continuous print processing. The image formation control method further includes the control device causing the printing device to execute a test print process of forming a test image on a sheet every time a print process of a page at a test timing during the continuous print processing is executed. The image formation control method further includes the control device causing the image reading device to execute the reading process for the test image. The image formation control method further includes the control device executing a determination process of determining whether a read image obtained by the reading process is normal or abnormal. The image formation control method further includes the control device causing the printing device to suspend the continuous print processing when it is determined that the read image is abnormal. The image formation control method further includes the control device causing the printing device to re-execute a target print process of a page after a page at the test timing corresponding to the determination process in which a result of determination as normal was obtained most recently, among executed print processes already executed in the continuous print processing when an adjusted event indicating that the printing device has been adjusted while the continuous print processing is suspended occurs. The image formation control method further includes the control device causing the printing device to execute a subsequent process in the continuous print processing following the target print process. The image formation control method further comprises the control device automatically adjusting the printing device in accordance with an abnormality detail of the read image in the determination process while the continuous print processing is suspended, wherein the adjusted event occurs after the printing device is automatically adjusted. The image formation control method further comprising the control device causing the printing device to re-execute the test print process after adjusting the printing device; the control device causing the image reading device to re-execute the reading process for the test image after causing the printing device to re-execute the test print process; and the control device re-executing the determination process for a read image obtained by re-executing the reading process, wherein the adjusted event is that it has been determined that the read image is normal by re-executing the determination process.

An image forming apparatus according to another aspect of the present disclosure includes the printing device, the reading device, and the control device for implementing the image formation control method.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a configuration diagram of an image forming apparatus according to an embodiment.
FIG. 2 is a block diagram showing a configuration of a control device in the image forming apparatus according to an embodiment.
FIG. 3 is a flowchart showing an example of the procedure of continuous print control in the image forming apparatus according to an embodiment.
FIG. 4 is a flowchart showing an example of the procedure of an abnormality handling process in the image forming apparatus according to an embodiment.
FIG. 5 is a flowchart showing a modification of the procedure of the abnormality handling process in the image forming apparatus according to an embodiment.

### DETAILED DESCRIPTION

An embodiment of the present disclosure will be described below with reference to the drawings. It is noted that the following embodiment is an example of embodying the present disclosure and does not limit the technical scope of the present disclosure.

An image forming apparatus 10 according to the embodiment is capable of executing a print process of forming an image on a sheet 9. The sheet 9 is a sheet-like image forming medium such as paper or a resin film. For example, the image forming apparatus 10 is a printer, a facsimile machine, a copier, or a multifunction peripheral.

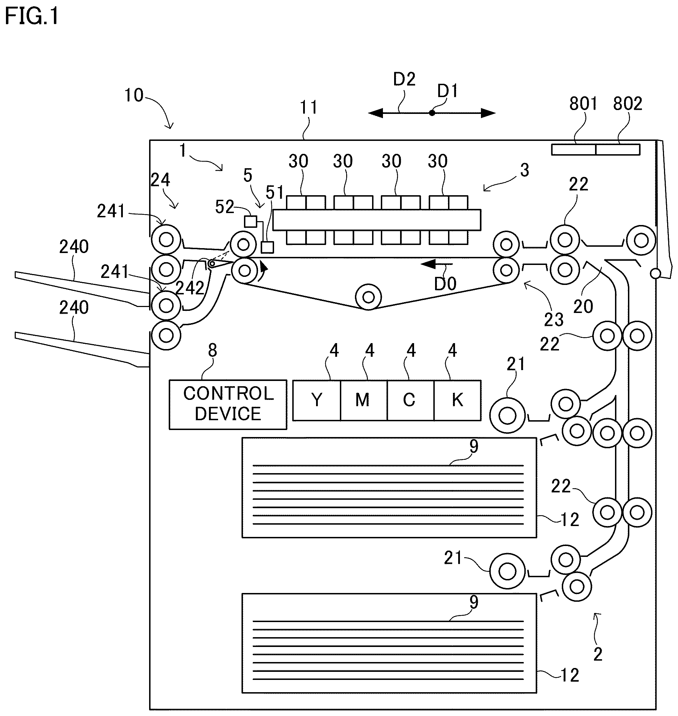

In the example shown in FIG. 1, the image forming apparatus 10 executes the print process using an inkjet method. It is noted that the image forming apparatus 10 may be a device that executes the print process using an electrophotographic method or another method.

### [Configuration of Image Forming Apparatus 10]

As shown in FIG. 1, the image forming apparatus 10 includes a printing device 1 and a control device 8.

Further, the image forming apparatus 10 also includes an operation device 801 and a display device 802. The printing device 1 and the control device 8 are arranged in a main housing 11.

The printing device 1 includes one or more sheet storing portions 12, a sheet conveying device 2, an image forming portion 3, a plurality of ink supply portions 4, and the like.

The sheet conveying device 2 feeds sheets 9 stored in the sheet storing portion 12 one by one to a conveying path 20, and further conveys the sheets 9 along the conveying path 20.

The sheet conveying device 2 includes one or more feeding mechanisms 21, a plurality of conveying roller pairs 22, a belt conveyor mechanism 23, a sheet discharging mechanism 24, and the like. The feeding mechanism 21 is provided corresponding to the sheet storing portion 12. In the example shown in FIG. 1, the image forming apparatus 10 includes two sheet storing portions 12 and two feeding mechanisms 21.

The feeding mechanism 21 feeds the sheet 9 from the sheet storing portion 12 to the conveying path 20. The plurality of conveying roller pairs 22 convey the sheet 9 along the conveying path 20, and further convey the sheet 9 to the belt conveyor mechanism 23.

The belt conveyor mechanism 23 is arranged below the image forming portion 3. The belt conveyor mechanism 23 conveys the sheet 9 in a conveying direction D0 along the image forming portion 3.

The direction orthogonal to the conveying direction D0 is a main scanning direction D1, and the direction along the conveying direction D0 is a sub-scanning direction D2 (see FIG. 1).

The image forming portion 3 includes a plurality of nozzle units 30 corresponding to a plurality of ink colors. Each of the plurality of nozzle units 30 has a plurality of nozzles and a plurality of piezoelectric elements. When the plurality of piezoelectric elements pressurize the inks supplied to the plurality of nozzles, causing the plurality of nozzles to eject inks.

In the present embodiment, the image forming portion 3 includes four nozzle units 30 corresponding to black, cyan, magenta, and yellow inks.

The plurality of nozzle units 30 eject inks of a plurality of colors from the plurality of nozzles toward the sheet 9 conveyed by the belt conveyor mechanism 23, thereby forming an image on the sheet 9.

Each of the plurality of ink supply portions 4 supplies ink of a predetermined color to the image forming portion 3. In the present embodiment, the image forming apparatus 10 includes four ink supply portions 4 corresponding to black, cyan, magenta, and yellow inks.

The sheet discharging mechanism 24 is arranged downstream of the belt conveyor mechanism 23 in the conveying direction D0. The sheet discharging mechanism 24 discharges the sheet 9 on which the image has been formed to the outside of the main housing 11. For example, the sheet discharging mechanism 24 discharges the sheet 9 from the main housing 11 to a sheet tray or a post-stage device arranged next to the image forming apparatus 10.

In the present embodiment, the sheet discharging mechanism 24 selectively discharges the sheet 9 on which the image has been formed to one of a plurality of discharge trays 240.

In the example shown in FIG. 1, the sheet discharging mechanism 24 includes a plurality of discharge roller pairs 241 and a path switching mechanism 242.

The plurality of discharge roller pairs 241 discharge the sheet 9 to the corresponding discharge trays 240. The path switching mechanism 242 can selectively switch the conveying destination of the sheet 9 fed from the belt conveyor mechanism 23 to one of the plurality of discharge roller pairs 241. The discharge destination of the sheet 9 is determined by the state of the path switching mechanism 242.

The operation device 801 receives human operations. For example, the operation device 801 includes one or both of a touch panel and one or more push buttons. The display device 802 can display various types of information. For example, the display device 802 is a panel display device such as a liquid crystal panel unit.

### [Control Device 8]

The control device 8 executes various types of data processing and control of devices included in the image forming apparatus 10.

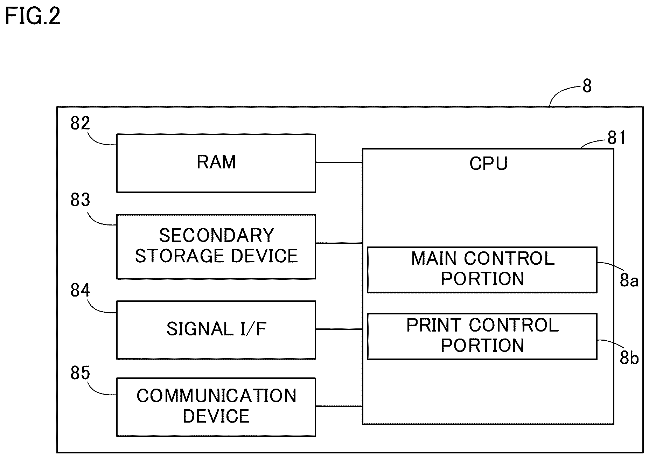

As shown in FIG. 2, the control device 8 includes a central processing unit (CPU) 81, a random access memory (RAM) 82, and peripheral devices such as a secondary storage device 83 and a signal interface 84. Further, the control device 8 includes a communication device 85.

The CPU 81 is a processor that executes various types of data processing and control by executing computer programs. The CPU 81 is an example of the processor that controls the image forming apparatus 10.

The RAM 82 is a computer-readable volatile storage device. The RAM 82 temporarily stores the computer programs executed by the CPU 81 and data output and referred to while the CPU 81 is executing various types of processing.

The secondary storage device 83 is a computer-readable nonvolatile storage device. The secondary storage device 83 can store and update the computer programs and various types of data. For example, one or both of a flash memory and a hard disk drive are employed as the secondary storage device 83.

The signal interface 84 converts signals output from various sensors into digital data, and transmits the converted digital data to the CPU 81. Further, the signal interface 84 converts the control command output from the CPU 81 into a control signal, and transmits the control signal to the device to be controlled.

The communication device 85 can communicate with a host device (not shown) and other devices. The host device is an information processing device such as a personal computer or a smartphone operated by the user.

For example, the CPU 81 receives a print job from the host device through the communication device 85. The image forming portion 3 forms an image specified by the print job on the sheet 9.

The CPU 81 includes a plurality of processing modules implemented by executing the computer programs. The plurality of processing modules include a main control portion 8a, a print control portion 8b, and the like.

The main control portion 8a executes control for starting various processes in response to processing requests input through the operation device 801 or the communication device 85, control of the display device 802, and the like.

The print control portion 8b controls the printing device 1. That is, the print control portion 8b controls the supply of the sheet 9 by the feeding mechanism 21, the conveyance of the sheet 9 by the plurality of conveying roller pairs 22 and the belt conveyor mechanism 23, and the discharge of the sheet 9 by the sheet discharging mechanism 24.

Further, the print control portion 8b causes the image forming portion 3 to execute the print process in synchronization with the conveyance of the sheet 9 by the sheet conveying device 2.

In the present embodiment, the print control portion 8b controls the plurality of piezoelectric elements of each of the nozzle units 30 to cause the image forming portion 3 to execute the print process.

The printing device 1 can execute continuous print processing. When receiving a request for the continuous print processing through the operation device 801 or the communication device 85, the print control portion 8b causes the printing device 1 to execute the continuous print processing. The continuous print processing is processing for continuously forming images on a plurality of sheets 9.

By the way, there is a risk that an abnormality occurs in an output image while the image forming apparatus 10 is performing the continuous print processing on a large number of sheets 9. Even in such a case, it is desired to obtain normal printouts of the continuous print processing.

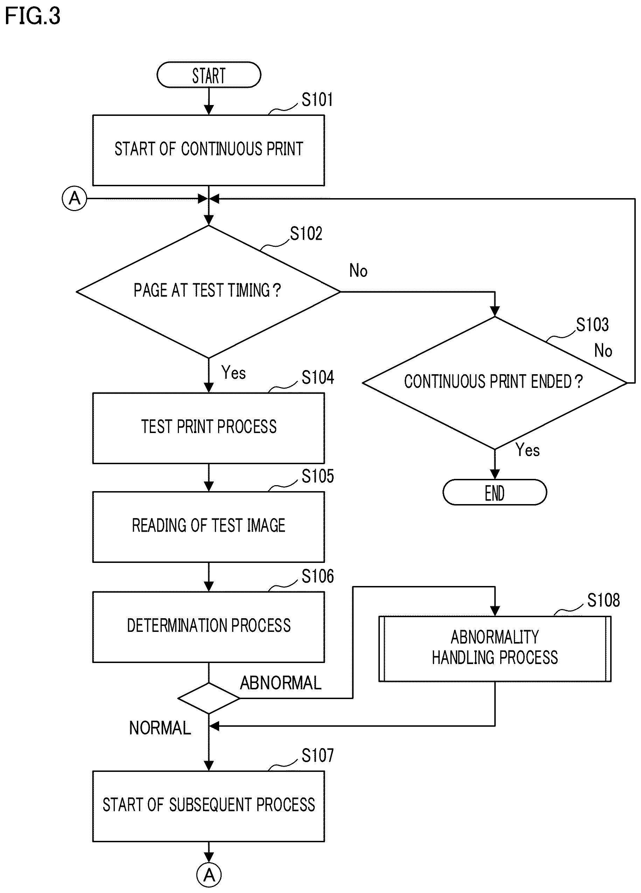

In the image forming apparatus 10, the print control portion 8b executes continuous print control to be described later (see FIG. 3). The continuous print control includes a process for obtaining normal printouts of the continuous print processing even if an abnormality occurs in an output image during the continuous print processing.

The image forming apparatus 10 further includes an image reading device 5. The image reading device 5 can execute a reading process of reading an image formed on the sheet 9 by the printing device 1.

The image reading device 5 includes an image sensor unit 51 and an analog front end 52. The image sensor unit 51 is arranged along the conveying path of the sheet 9. In the present embodiment, the image sensor unit 51 is arranged to face the belt conveyor mechanism 23.

The image sensor unit 51 reads the image formed on the sheet 9 by the printing device 1, and outputs an analog image signal representing the read image. The analog front end 52 converts the image signal output by the image sensor unit 51 into digital image data, and transmits the image data to the CPU 81.

### [Continuous Print Control]

An example of the procedure of the continuous print control will be described below with reference to the flowchart shown in FIG. 3. The continuous print control is an example of the processing for implementing an image formation control method for controlling the image forming apparatus 10.

The print control portion 8b starts the continuous print control when a request for the continuous print processing is received through the operation device 801 or the communication device 85.

In the following description, S101, S102, ... represent identification codes of a plurality of steps in the continuous print control. In the continuous print control, the process of step S101 is executed first.

### <Step S101>

In step S101, the print control portion 8b causes the printing device 1 to start the continuous print processing corresponding to the request, and further causes the printing device 1 to proceed with the continuous print processing.

In accordance with the process of step S101, the printing device 1 starts the continuous print processing and further proceeds with the continuous print processing.

The print control portion 8b executes the process of step S102 after executing the process of step S101.

### <Step S102>

In step S102, the print control portion 8b selects the next process depending on whether or not the print process of the page at a test timing during the continuous print processing has been executed.

For example, the page at the test timing is a page for every predetermined number of pages. In addition, the page at the test timing may be a page for every predetermined time or a page for every predetermined number of output pixels.

The print control portion 8b executes the process of step S103 when the print process of the page at the test timing has not yet been executed.

On the other hand, the print control portion 8b executes the process of step S104 when the print process of the page at the test timing has been executed.

### <Step S103>

In step S103, the print control portion 8b selects the next process depending on whether or not the continuous print processing has ended.

The print control portion 8b executes the process of step S102 when the continuous print processing has not ended.

On the other hand, the print control portion 8b ends the continuous print control when the continuous print processing has ended.

### <Step S104>

In step S104, the print control portion 8b causes the printing device 1 to execute a test print process. The test print process is a process of forming a test image on a sheet 9.

For example, the test image includes a line array image in which a plurality of line segment images are arranged for each of the plurality of ink colors. In addition, the test image may include a patch image of a predetermined density for each of the plurality of ink colors.

The print control portion 8b executes the process of step S105 after executing the process of step S104.

### <Step S105>

In step S105, the print control portion 8b causes the image reading device 5 to execute the reading process for the test image formed on the sheet 9 by the test print process. Thus, data of a read image of the test image is obtained.

The print control portion 8b executes the process of step S106 after executing the process of step S105.

### <Step S106>

In step S106, the print control portion 8b executes a determination process of determining whether the read image obtained by the reading process in step S105 is normal or abnormal.

For example, the print control portion 8b determines whether the read image is normal or abnormal by determining the degree of pixel deficiency of each of the plurality of line segment images in the line array image. In addition, the print control portion 8b may determine whether the read image is normal or abnormal in accordance with the density of the patch image.

Further, in step S106, the print control portion 8b selects the next process depending on whether the result of the determination process is normal or abnormal.

When the result of the determination process is normal, the print control portion 8b executes the process of step S107. When the result of the determination process is abnormal, the print control portion 8b executes the process of step S108.

### <Step S107>

In step S107, the print control portion 8b causes the printing device 1 to start a subsequent process in the continuous print processing, and further causes the printing device 1 to proceed with the subsequent process.

The subsequent process is a process following the already executed print process in the continuous print processing.

After executing the process of step S107, the print control portion 8b executes the processes from step S102 onwards.

### <Step S108>

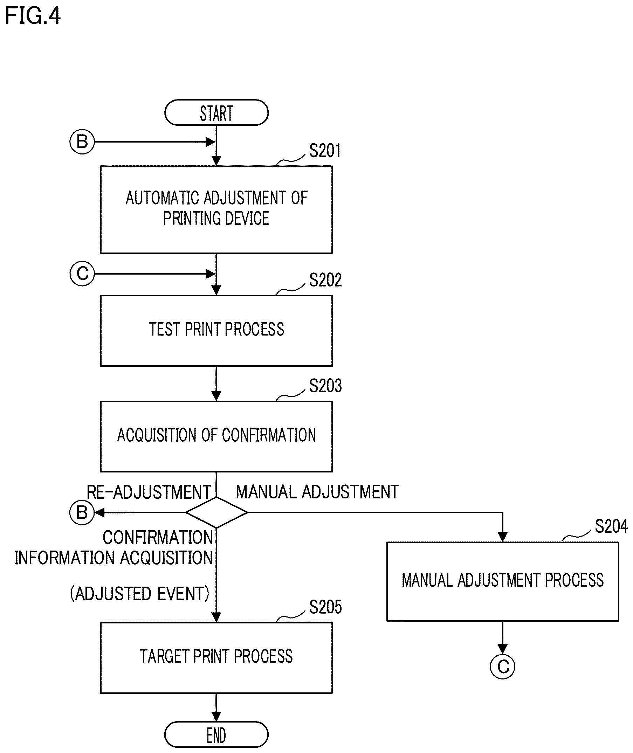

On the other hand, in step S108, the print control portion 8b causes the printing device 1 to suspend the continuous print processing, and then executes an abnormality handling process to be described later (see FIG. 4).

The print control portion 8b executes the process of step S107 after executing the process of step S108.

As described above, the processes from step S104 onwards are executed every time the print process of the page at the test timing during the continuous print processing is executed.

### [Abnormality Handling Process]

Next, an example of the procedure of the abnormality handling process will be described with reference to the flowchart shown in FIG. 4. The abnormality handling process is executed while the continuous print processing is suspended.

In the following description, S201, S202, ... represent identification codes of a plurality of steps in the abnormality handling process. In the abnormality handling process, the process of step S201 is executed first.

### <Step S201>

In step S201, the print control portion 8b automatically adjusts the printing device 1 in accordance with the details of the abnormality of the read image in the determination process.

For example, the print control portion 8b executes, as an adjustment process, a process of outputting an oscillation signal or a drive signal to a target element corresponding to a position of a missing pixel in the line array image among the plurality of piezoelectric elements in each nozzle unit 30.

The oscillation signal is a signal for causing the target element to oscillate to such an extent that the ink undergoes meniscus oscillation. Thus, in a target nozzle corresponding to the target element among the plurality of nozzles, the viscosity of the ink decreases without ink being ejected from the nozzle.

The drive signal is a signal for vibrating the target element to such an extent that ink is ejected from the target nozzle. Accordingly, the ink having a high viscosity is ejected from the target nozzle, and a new ink having a low viscosity is supplied to the target nozzle.

In addition, a process of correcting the drive signal for the target element corresponding to the patch image with the density abnormality among the plurality of piezoelectric elements in each of the nozzle units 30 is executed as an adjustment process.

The print control portion 8b executes the process of step S202 after executing the process of step S201.

### <Step S202>

In step S202, the print control portion 8b causes the printing device 1 to re-execute the same test print process as that of step S104.

That is, the print control portion 8b causes the printing device 1 to re-execute the test print process after adjusting the printing device 1. The print control portion 8b executes the process of step S203 after executing the process of step S202.

### <Step S203>

In step S203, the print control portion 8b executes a confirmation acquisition process of acquiring adjustment confirmation information. The adjustment confirmation information indicates that it has been confirmed that the abnormality of the output image has been eliminated by the adjustment of the printing device 1.

For example, the print control portion 8b executes the confirmation acquisition process after executing a confirmation request process. The confirmation request process is a process of outputting confirmation request information for requesting visual confirmation of whether the test image formed on the sheet 9 in step S202 is normal or abnormal.

The print control portion 8b outputs the confirmation request information through the communication device 85 or the display device 802. Further, in the confirmation acquisition process, the print control portion 8b acquires response information corresponding to the confirmation request information through the communication device 85 or the display device 802.

When the acquired response information is the adjustment confirmation information, the print control portion 8b executes the process of step S205.

When the acquired response information is readjustment instruction information, the print control portion 8b re-executes the processes from step S201 onwards. The readjustment instruction information is information for instructing re-execution of automatic adjustment of the printing device 1.

When the acquired response information is manual adjustment information, the print control portion 8b re-executes the processes from step S204 onwards.

### <Step S204>

In step S204, the print control portion 8b executes a manual adjustment process of adjusting the printing device 1 in accordance with an adjustment instruction input through the operation device 801 or the communication device 85.

The print control portion 8b executes the process of step S202 after executing the process of step S204. The print control portion 8b repeats the process of step S201 or step S204 and the processes of steps S202 to S203 until the adjustment confirmation information can be acquired.

In the present embodiment, acquiring the adjustment confirmation information by the confirmation acquisition process of step S203 is an example of the adjusted event which occurs after the process of step S201. The adjusted event indicates that the printing device 1 has been adjusted while the continuous print processing is suspended.

The print control portion 8b executes the process of step S205 when the adjusted event occurs.

### <Step S205>

In step S205, the print control portion 8b causes the printing device 1 to re-execute the target print process, which is part or all of the already executed print processes in the continuous print processing.

Specifically, the target print process is a print process of a page after the page at the test timing corresponding to the determination process in which the result of determination as normal was obtained most recently among the executed print processes.

By executing the process of step S205, even when an abnormality occurs in the output image during the continuous print processing, normal printouts of the continuous print processing can be reliably obtained.

Here, the process prior to the target print process in the continuous print processing is referred to as a pre-target process.

In step S205, the print control portion 8b causes the printing device 1 to execute the discharge process of the sheet 9 after image formation in different modes in the pre-target process and the target print process.

In the present embodiment, the print control portion 8b causes the printing device 1 to discharge the sheet 9 to different discharge destinations of the plurality of discharge trays 240 in the pre-target process and the target print process. At this time, the print control portion 8b controls the discharge destination of the sheet 9 by controlling the path switching mechanism 242.

In addition, one target tray among the plurality of discharge trays 240 may be used for the pre-target process and the target print process.

For example, in step S205, the print control portion 8b may cause the printing device 1 to discharge the sheet 9 after image formation to the target tray at different discharge speeds in the pre-target process and the target print process. As a result, the sheet 9 corresponding to the pre-target process and the sheet 9 corresponding to the target print process are discharged to different positions in the discharge direction on the target tray.

The discharge destination of the sheet 9 and the discharge speed of the sheet 9 are examples of the mode of the discharge process of the sheet 9 after image formation.

Since the discharge process of the sheet 9 is executed in different modes in the pre-target process and the target print process, it is easy to identify the page subjected to the target print process. Therefore, it is easy to replace the page subjected to the target print process.

In step S205, the print control portion 8b may cause the printing device 1 to execute one or both of a first sheet insertion process and a second sheet insertion process.

The first sheet insertion process is a process of conveying and discharging an additional sheet between the process before the target print process and the target print process in the continuous print processing. The second sheet insertion process is a process of conveying and discharging an additional sheet between the target print process and the process after the target print process in the continuous print processing.

The additional sheet is a sheet 9 for distinguishing the sheet 9 discharged by the target print process from the sheets 9 discharged by the processes other than the target print process in the continuous print processing.

For example, the plurality of sheet storing portions 12 may include a first sheet storing portion for storing sheets 9 of a first color and a second sheet storing portion for storing sheets 9 of a second color different from the first color. It is conceivable that the first color is white and the second color is chromatic.

In the above case, the print control portion 8b causes the printing device 1 to convey and discharge a sheet 9 in the first sheet storing portion in the continuous print processing.

Further, in one or both of the first sheet insertion process and the second sheet insertion process, the print control portion 8b causes the printing device 1 to execute a process of conveying and discharging a sheet 9 in the second storing portion. The sheet 9 in the second storing portion is an example of the additional sheet.

By executing the first sheet insertion process or the second sheet insertion process, the sheet 9 subjected to the target print process can be easily distinguished from the other sheets 9. Therefore, it is easy to replace the page subjected to the target print process.

After executing the process of step S205, the print control portion 8b ends the abnormality handling process. Following the end of the abnormality handling process, the print control portion 8b executes the process of step S107 (see FIG. 3).

That is, the print control portion 8b causes the printing device 1 to execute the subsequent process following the target print process (step S107). As described above, the subsequent process is a process following the already executed print process in the continuous printing processing.

By employing the image forming apparatus 10, normal printouts of the continuous print processing can be obtained even if an abnormality in an output image occurs during the continuous print processing.

### [Modification]

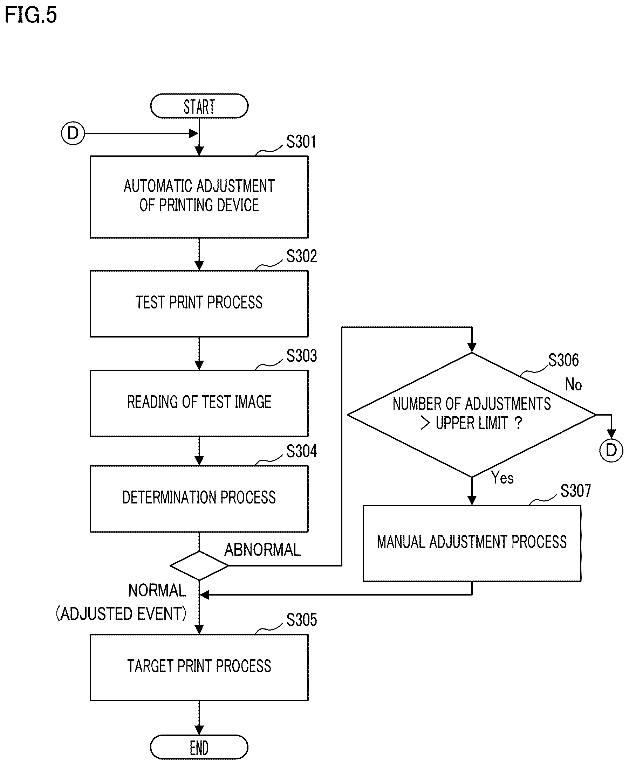

Next, an example of the procedure of the abnormality handling process according to a modification will be described with reference to the flowchart shown in FIG. 5.

In the following description, S301, S302, ... represent identification codes of a plurality of steps in the abnormality handling process according to the modification. In the abnormality handling process, the process of step S301 is executed first.

### <Steps S301 and S302>

The processes of steps S301 and S302 are the same as the processes of steps S201 and S202 shown in FIG. 4.

Namely, the print control portion 8b automatically adjusts the printing device 1 in accordance with the details of the abnormality of the read image in the determination process (step S301).

Further, the print control portion 8b causes the printing device 1 to re-execute the test print process after adjusting the printing device 1.

The print control portion 8b executes the process of step S303 after executing the process of step S302.

### <Step S303>

In step S303, the print control portion 8b causes the image reading device 5 to execute the reading process for the test image formed on the sheet 9 by the test print process of step S302.

The process of step S303 is the same as the process of step S105 (see FIG. 3). By the process of step S303, data of a read image of the test image can be obtained.

The print control portion 8b executes the process of step S304 after executing the process of step S303.

### <Step S304>

In step S304, the print control portion 8b executes the determination process for the read image obtained by the reading process of step S303.

The process of step S304 is the same as the process of step S106 (see FIG. 3).

When the result of the determination process is normal, the print control portion 8b executes the process of step S305. On the other hand, when the result of the determination process is abnormal, the print control portion 8b executes the process of step S306.

### <Step S305>

In step S305, the print control portion 8b causes the printing device 1 to re-execute the target print process in the same manner as in step S205.

After executing the process of step S305, the print control portion 8b ends the abnormality handling process. Following the end of the abnormality handling process, the print control portion 8b executes the process of step S107 (see FIG. 3).

### <Step S306>

On the other hand, in step S306, the print control portion 8b selects the next process depending on whether or not the number of times the automatic adjustment in step S301 has been executed has exceeded the upper limit number of times.

When the number of times the automatic adjustment of step S301 has been executed has not exceeded the upper limit number of times, the print control portion 8b repeats the processes from step S301 onwards.

That is, the print control portion 8b causes the printing device 1 to re-execute the test print process after adjusting the printing device 1 (step S302).

Further, the print control portion 8b causes the image reading device 5 to re-execute the reading process for the test image after causing the printing device 1 to re-execute the test print process (step S303).

Further, the print control portion 8b re-executes the determination process for the read image obtained by the re-execution of the reading process (step S304).

The print control portion 8b causes the printing device 1 to execute the target print process when it is determined that the read image is normal by the re-execution of the determination process (steps S304 and S305).

In this application example, the read image being determined to be normal by the re-execution of the determination process in step S304 is the adjusted event. The print control portion 8b executes the process of step S305 when the adjusted event occurs.

On the other hand, the print control portion 8b executes the process of step S307 when the number of times the automatic adjustment of step S301 has been executed exceeds the upper limit number of times.

### <Step S307>

In step S307, the print control portion 8b executes the manual adjustment process as in step S204.

The print control portion 8b executes the process of step S305 after executing the process of step S307.

Also in the case where the abnormality handling process according to the present application example is employed, the same effects as in the case where the abnormality handling process shown in FIG. 4 is employed can be obtained.

It is to be understood that the embodiments herein are illustrative and not restrictive, since the scope of the disclosure is defined by the appended claims.

## Claims

1. An image formation control method for controlling an image forming apparatus (10) including a printing device (1) capable of executing continuous print processing for continuously forming images on a plurality of sheets and an image reading device (5) capable of executing a reading process of reading the images formed on the sheets, the image formation control method comprising:
a control device (8) causing the printing device (1) to execute the continuous print processing;
the control device (8) causing the printing device (1) to execute a test print process of forming a test image on a sheet every time a print process of a page at a test timing during the continuous print processing is executed;
the control device (8) causing the image reading device (5) to execute the reading process for the test image;
the control device (8) executing a determination process of determining whether a read image obtained by the reading process is normal or abnormal;
the control device (8) causing the printing device (1) to suspend the continuous print processing when it is determined that the read image is abnormal;
the control device (8) causing the printing device (1) to re-execute a target print process of a page after the page at the test timing corresponding to the determination process in which a result of determination as normal was obtained most recently, among executed print processes already executed in the continuous print processing when an adjusted event indicating that the printing device (1) has been adjusted while the continuous print processing is suspended occurs;
the control device (8) causing the printing device (1) to execute a subsequent process in the continuous print processing following the target print process; and
the control device (8) automatically adjusting the printing device (1) in accordance with an abnormality detail of the read image in the determination process while the continuous print processing is suspended, wherein
the adjusted event occurs after the printing device (1) is automatically adjusted,
**characterized by** the image formation control method further comprising:
the control device (8) causing the printing device (1) to re-execute the test print process after adjusting the printing device (1);
the control device (8) causing the image reading device (5) to re-execute the reading process for the test image after causing the printing device (1) to re-execute the test print process; and
the control device (8) re-executing the determination process for a read image obtained by re-executing the reading process, wherein
the adjusted event is that it has been determined that the read image is normal by re-executing the determination process.

2. The image formation control method according to claim 1, further comprising:
the control device (8) causing the printing device (1) to re-execute the test print process after adjusting the printing device (1); and
the control device (8) executing a confirmation acquisition process of acquiring adjustment confirmation information after causing the printing device (1) to re-execute the test print process, wherein
the adjusted event is that the adjustment confirmation information has been acquired by the confirmation acquisition process.

3. The image formation control method according to claim 1 or 2, wherein the control device (8) causes the printing device (1) to execute the target print process and a process before the target print process in the continuous print processing in different modes in a discharge process of the sheets after image formation.

4. The image formation control method according to any one of claims 1 to 3, further comprising: the control device (8) causing the printing device (1) to execute one or both of a process of conveying and discharging an additional sheet between the target print process and a process before the target print process in the continuous print processing and a process of conveying and discharging an additional sheet between the target print process and a process before the target print process in the continuous print processing.

5. An image forming apparatus (10) comprising:
a printing device (1) capable of executing continuous print processing for forming images on a plurality of sheets; and
an image reading device (5) capable of executing a reading process of reading images formed on the sheets;
the image forming apparatus **characterized by** comprising a control device (8) for implementing the image formation control method according to any one of claims 1 to 2.
